# EUROPÄISCHE PATENTSCHRIFT

(11) **EP 2 455 724 B1**
(45) Veröffentlichungstag und Bekanntmachung des Hinweises auf die Patenterteilung: **21.09.2016**
(21) Anmeldenummer: 10014736.2
(22) Anmeldetag: 18.11.2010
(51) Int. Cl.: G01F 1/40

(54) **Flusssensor**
Flow sensor
Capteur de flux

(43) Veröffentlichungstag der Anmeldung: 23.05.2012
(73) Patentinhaber: Axetris AG, 6056 Kägiswil (CH)
(72) Erfinder: Wielath, Thomas, 6060 Ramersberg (CH); Bürgi, Stefan, 6300 Zug (CH)
(74) Vertreter: Klocke, Peter

(56) Entgegenhaltungen:
- EP-A1- 0 829 793
- EP-A1- 1 091 195
- WO-A1-95/08065
- WO-A2-02/12835
- US-A- 4 790 194
- US-A- 4 800 754
- US-A1- 2006 101 908
- US-B1- 6 826 966

## Beschreibung

Die Erfindung betrifft einen Flusssensor zur Messung des Flusses eines gasförmigen oder flüssigen Mediums, mit einem Sensorgehäuse, in dem sich zwischen einem Einlasskanal und einem Auslasskanal ein Strömungskanal erstreckt, der einen Hauptkanal und einen parallel zu dem Hauptkanal geschalteten Messkanal aufweist, wobei in dem Hauptkanal mindestens eine Hauptkanal-Drosselstelle angeordnet ist und der Messkanal ein Sensorelement zur Messung des Flusses aufweist.

Derartige Flusssensoren sind an sich in vielfältigen Ausführungsformen bekannt und werden üblicherweise als Durchflussmesser bezeichnet. Das zwischen dem Einlasskanal und dem Auslasskanal in dem Strömungskanal angeordnete Sensorelement ermöglicht die Bestimmung des Massenflusses des Mediums durch den Flusssensor durch Messung einer physikalischen Größe.

Aus der US 6,826,966 B1 ist ein eingangs beschriebener Flusssensor bekannt, der eine Drosselstelle im Hauptkanal aufweist. Die Drosselstelle im Hauptkanal vergrößert die Strömungsgeschwindigkeit in dem Hauptkanal und bewirkt außerdem abhängig von ihrem Querschnitt eine Druckveränderung im Hauptkanal.

Eine weitere Vorrichtung zur Messung des Flusses eines Fluids ist aus der CH 696 006 A5 bekannt. Sie weist einen Hauptkanal und einen Nebenkanal auf, die zusammen den Strömungskanal bilden. Der Nebenkanal, der einen Bypass zu dem Hauptkanal bildet, besitzt gegenüber dem Hauptkanal einen geringeren Querschnitt. Als Messkanal ist in dem Nebenkanal das Sensorelement zur Messung des Flusses angeordnet. Bei bekanntem Querschnitt des Messkanals und des Hauptkanals lässt sich aus dem im Messkanal gemessenen Massenfluss der Massenfluss im Hauptkanal bestimmen. Daraus ergibt sich der Gesamtfluss durch den Strömungskanal des Flusssensors. Der Nebenkanal ist mittels einer Blende, die als Drosselstelle wirkt, in zwei aneinander anschließende Abschnitte unterteilt. In dem in Flussrichtung des Mediums vor der Drosselstelle liegenden ersten Abschnitt herrschen laminare Strömungen, in dem nach der Drosselstelle liegenden zweiten Abschnitt liegen turbulente Strömungseffekte vor. Für eine genaue Messung ist das Sensorelement dem ersten Abschnitt zugeordnet.

Die Drosselstelle ist ein Bereich in dem Flusssensor, an dem der Durchflussquerschnitt des Strömungskanals verengt ist, so dass der Durchfluss des Mediums an dieser Stelle gedrosselt wird. Die Drosselstelle setzt dem Medium einen gegenüber anderen Stellen des Strömungskanals erhöhten Widerstand entgegen. Als nachteilig wird bei dem vorstehend genannten Stand der Technik angesehen, dass der Strömungswiderstand des Hauptkanals und des Nebenkanals (Messkanals) abhängig von der Durchflussmenge sind und dass das Teilungsverhältnis der Durchflussmengen druck- und temperaturabhängig ist. Dies ist bei dem vorstehend aufgeführten Stand der Technik dadurch begründet, dass der Strömungskanal nur eine Drosselstelle aufweist, die entweder im Hauptkanal oder in dem Messkanal angeordnet ist.

Weitere spezielle Ausführungsformen von Flusssensoren sind beispielsweise aus den Druckschriften US 4,800,754, EP 0 552 916, EP 0 829 793, EP 1 091 195, EP 1 256 786, US 7,107,834, US 3,851,526, US 4,450,718 und EP 0 558 834 als Stand der Technik bekannt. Die darin offenbarten Durchflussmesser weisen jeweils einen Haupt- und einen Nebenkanal auf, die einen oder mehrere Strömungszweige umfassen. Zum Erwirken einer laminaren Strömung in den Strömungszweigen sind teilweise Drosselstellen in dem Haupt- und/oder dem Nebenkanal (Messkanal) vorgesehen.

Die aus der EP 1 091 195 A1 bekannte Messvorrichtung für die Durchflussrate und die Durchflussgeschwindigkeit eines strömendes Fluids ist derart ausgebildet, dass Ablagerungen an dem zur Messung verwendeten Sensorelement weitgehend vermieden werden. Dazu weist die Messvorrichtung einen Hauptkanal und einen parallel zu dem Hauptkanal geschalteten Messkanal auf, wobei der Messkanal eingangs- und ausgangsseitig je eine Messkanaldrosselstelle mit einem einzigen Durchlauf aufweist. Der Messkanal ist zwischen den beiden Messkanaldrosselstellen in zwei nebeneinander verlaufende unterschiedlich lange Messkanalzweige aufgeteilt, wobei das Sensorelement in dem längeren der beiden Messkanalzweige in einem mittleren Bereich angeordnet ist.

Der Erfindung liegt die Aufgabe zugrunde, einen gattungsgemäßen Flusssensor vorzuschlagen, bei der das Teilungsverhältnis der Durchflussmengen möglichst druck- und temperaturunabhängig ist. Zudem sollen starke Turbulenzen in dem Hauptkanal möglich sein, ohne dass der Messbereich des Sensorelementes überschritten wird.

Diese Aufgabe wird erfindungsgemäß durch einen Flusssensor mit den Merkmalen des Anspruchs 1 gelöst. Weitere vorteilhafte Ausgestaltungen sind den rückbezogenen Ansprüchen zu entnehmen.

Bei dem erfindungsgemäßen Flusssensor weist die Hauptkanal-Drosselstelle mehrere Durchgänge zwischen dem Einlasskanal und/oder Auslasskanal und dem Hauptkanal auf. Durch Variation des Querschnittes der Durchgänge kann das Teilungsverhältnis der Durchflussmenge des Hauptkanals zu der des Messkanals variiert werden. Für eine Änderung des Teilungsverhältnisses wird vorzugsweise nicht der Durchflussquerschnitt der Durchgänge vergrößert, sondern es wird anstelle dessen zur Minderung des Strömungswiderstandes in dem Hauptkanal mindestens ein zusätzlicher Durchgang in die Drosselstelle eingebracht. Auf diese Weise können hohe Durchflussraten durch den Hauptkanal realisiert werden, ohne dass die Durchflussrate durch den Messkanal stark beeinflusst wird. Damit werden bei hohem Druck und hohen Flussmengen des durch den Flusssensor geleiteten Mediums starke turbulente Effekte in dem Hauptkanal verhindert, die möglicherweise störend auf den Messkanal einwirken und dazu führen können, dass das Messergebnis des Sensorelementes mehr oder weniger verfälscht oder unter Umständen sogar der Messbereich des Flusssensors überschritten wird.

Bei einer bevorzugten Ausführungsform der Erfindung sind die an der Hauptkanal-Drosselstelle vorgesehenen Durchgänge identisch ausgebildet und erstrecken sich in Flussrichtung des Mediums parallel zueinander. Durch das Hinzufügen von mehrerer solcher Durchgänge an der Drosselstelle des Hauptkanals kann das Teilungsverhältnis der Flussrate zwischen Haupt- und Messkanal beliebig eingestellt werden. Da alle Durchgänge gleich dimensioniert sind, bilden diese gleiche fluidische Widerstände für das fließende Medium, die entsprechend auch dasselbe Druck-, Temperatur- und Flussverhalten zeigen, so dass das Teilungsverhältnis bezüglich Haupt- und Messkanal von diesem Parametern nicht beeinflusst wird. Ein Hauptkanal, bei dem an der Drosselstelle mehrere Durchgänge vorgesehen sind, weist gegenüber dem Messkanal immer einen geringeren fluidischen Widerstand auf.

In einer günstigen Ausführungsform des erfindungsgemäßen Flusssensors ist der Hauptkanal in mindestens zwei parallel zu dem Messkanal geschaltete Hauptkanalzweige aufgeteilt, wobei die Anzahl der Hauptkanalzweige den Massenfluss durch den Hauptkanal bestimmt. Dabei weist vorzugsweise mindestens ein Hauptkanalzweig mindestens eine Hauptkanal-Drosselstelle auf. Der Massenfluss durch den Hauptkanal kann insbesondere ohne Einwirkung auf den Massenfluss durch den Messkanal durch Variation der Anzahl der Hauptkanalzweige an unterschiedliche Medien, an unterschiedliche Strömungsgeschwindigkeiten bzw. an unterschiedlichen Förderdruck des Mediums einfach angepasst werden.

Bei einer vorteilhaften Variante der Erfindung weist der Hauptkanal bzw. weisen die Hauptkanalzweige eingangsseitig und/oder ausgangsseitig eine Hauptkanal-Drosselstelle auf. Damit werden in dem Hauptkanal turbulente Strömungen sicher verhindert, die auf die laminare Strömung im Messkanal störend einwirken könnten. Dies verringert die Turbulenzen in dem Hauptkanal zuverlässig, indem es zu einem weitgehend laminaren Fluss des Mediums führt. Bei jeweils ein- und ausgangsseitig an dem Haupt- und dem Messkanal vorgesehenen Drosselstellen wird eine gegenseitige Beeinflussung der Strömungen effektiv ausgeschlossen.

Vorteilhafterweise weist bei einer Ausführungsform der Messkanal eingangs- und ausgangsseitig eine Messkanal-Drosselstelle auf. Die Messkanal-Drosselstelle wirkt in gleicher Weise auf den Messkanal, wie die mindestens eine Hauptkanal-Drosselstelle auf den Hauptkanal. Sie stellt eine störungsfreie laminare Strömung in den Hauptkanal sicher. Als besonders günstig haben sich MesskanalDrosselstellen eingangs- und ausgangsseitig erwiesen, insbesondere dann, wenn der Hauptkanal nur eine einzige Hauptkanal-Drosselstelle aufweist.

Bei einer vorteilhaften Modifikation des erfindungsgemäßen Flusssensors weist die Messkanal-Drosselstelle einen Durchlauf auf, der entsprechend dem Durchgang der Hauptkanal-Drosselstelle ausgebildet ist. Dieser erstreckt sich idealerweise parallel zu den Durchgängen der mindestens einen Hauptkanal-Drosselstelle. Dies stellt zum einen sicher, dass durch die gleiche Dimensionierung alle fluidischen Widerstände in dem Mess- und in dem Hauptkanal dasselbe Druck-, Temperatur- und Flussverhalten aufweisen, so dass das Teilungsverhältnis des Massenstroms durch den Haupt- und den Messkanal von Änderungen dieser Parameter nicht berührt werden. Dies ermöglicht zum anderen eine kostengünstige Herstellung aller Drosselstellen.

Für eine flexiblere Skalierbarkeit des Flussbereiches des erfindungsgemäßen Flusssensors durch Hinzufügen bzw. Reduzieren von Durchgängen zu der mindestens einen Hauptkanal-Drosselstelle weist die Hauptkanal-Drosselstelle vorzugsweise mehrere Durchgänge, die entweder bei noch nicht zusammengebautem Flusssensor fix verschließbar sind oder bei zusammengesetztem Flusssensor manuell oder automatisch schließbar und/oder öffenbar sind. Dazu weist das Sensorgehäuse eine Bedieneinrichtung zum Verschließen und/oder Öffnen mindestens eines Durchgangs der Hauptkanal-Drosselstelle auf. Mit der Bedieneinrichtung können die Verschlusselemente für die Durchgänge manuell gesetzt oder mittels einem elektro-mechanischen Aktuator beeinflusst werden. Durch die Möglichkeit auf die Anzahl der wirkenden Durchgänge der Hauptkanal-Drosselstelle Einfluss zu nehmen, kann der erfindungsgemäße Flusssensor individuell nach dem Einbau an unterschiedliche Flussraten eines Mediums einfach angepasst werden. Zudem wird damit bei der Fertigung des Flusssensors die Anzahl von Varianten im Hinblick auf unterschiedlich große Durchflussmengen reduziert.

Als günstig für die Fertigung und die Funktion des erfindungsgemäßen Flusssensors werden zwei Ausführungsformen der Erfindung angesehen, bei denen der Hauptkanal und der Messkanal entweder in einer Ebene oder in verschiedenen Ebenen einander gegenüberliegend in dem Sensorgehäuse angeordnet sind. Dies ist besonders dann zweckmäßig, wenn der Flusssensor modular aufgebaut ist und der Haupt- und der Nebenkanal in einem monolithischen zentralen Teil des Sensorgehäuses ausgebildet ist. Dabei kann der Einlasskanal und/oder der Auslasskanal des Sensorgehäuses in der Ebene des Hauptkanals und/oder des Messkanals oder in einer anderen Ebene des Sensorgehäuses angeordnet sein. Bevorzugt wird eine Ausführungsform, bei der der Hauptkanal und/oder der Messkanal nicht in der vom Einlasskanal und dem Auslasskanal bestimmten Ebene angeordnet ist. Dies ermöglicht in Verbindung mit einfachen Geometrien des Strömungskanals sowie des Ein- und Auslasskanals des Sensorgehäuses die Anwendung von einfachen etablierten Fertigungsverfahren um den Flusssensor kostengünstig herzustellen.

Bei einer favorisierten Ausbildung des erfindungsgemäßen Flusssensors ist das Sensorgehäuse mehrteilig ausgebildet. Es weist ein erstes Sensorgehäuseteil und mindestens ein zweites Sensorgehäuseteil auf, zwischen denen der Hauptkanal und/oder der Messkanal gebildet ist. Dabei ist der Hauptkanal bzw. der Messkanal als Ausnehmung in dem ersten und/oder dem zweiten oder weiteren Sensorgehäuseteilen ausgeführt. Hierbei weist vorzugsweise ein Sensorgehäuseteil die Hauptkanal-Drosselstelle und/oder die Messkanal-Drosselstelle auf, die sich bei zusammengefügten Sensorgehäuseteilen quer zu dem Hauptkanal und zu dem Messkanal erstreckt. Dabei kann das Sensorgehäuseteil mit der mindestens einen Hauptkanal-Drosselstelle und/oder der mindestens einen Messkanal-Drosselstelle als zusätzliches Sensorgehäuseteil zu den den Hauptkanal und/oder den Messkanal bildenden Sensorgehäuseteilen vorgesehen sein. Als besonders zweckmäßig erscheint es, an den Sensorgehäuseteilen mit der Hauptkanal-Drosselstelle und/oder der Messkanal-Drosselstelle den Einlasskanal und/oder den Auslasskanal des Strömungskanals anzuordnen.

Durch diesen modularen Aufbau des Sensorgehäuses können verschiedenartige Flusssensoren durch Kombination bestimmter vorgefertigter Sensorgehäuseteile schnell und einfach realisiert werden. Die Sensorgehäuseteile werden mit den üblichen, dem Fachmann bekannten Verfahren aneinander festgelegt und gegeneinander abgedichtet. Mit dem vorgesehenen Sensorelement verbundene Leitungen werden in herkömmlicher Weise fluiddicht aus dem Sensorgehäuse herausgeführt.

Vorzugsweise sind die Ausnehmungen für den Hauptkanal und den Messkanal, der Einlasskanal und der Auslasskanal des Strömungskanals und die Hauptkanal-Drosselstelle sowie die Messkanal-Drosselstelle gemeinsam in einem ersten Sensorgehäuseteil angeordnet, wobei mindestens ein zweites Sensorgehäuseteil als ebener Gegenhalter mit oder ohne Ausnehmung ausgebildet ist. Als ebener Gegenhalter kann beispielsweise eine biegesteife Schaltungsleiterplatte dienen, die das Sensorelement direkt trägt. Die Anschlussleitungen können in diesem Fall von Leiterbahnen auf der Leiterplatte gebildet sein. Die Leiterplatte, die mindestens die Größe des ersten Gehäuseteils aufweist, ist mit dem ersten Gehäuseteil verschraubbar, wobei zur Abdichtung gegenüber dem Gehäuseteil übliche, dem Fachmann vertraute Dichtungsverfahren anzuwenden sind. Das erste Sensorgehäuseteil bildet ein zentrales Sensorgehäuseteil des modularen Sensorgehäuses. Bei diesem ersten Sensorgehäuseteil verbinden die Drosselstellen die mindestens eine Ausnehmung des Hauptkanals und die Ausnehmung des Messkanals mit dem Einlasskanal bzw. dem Auslasskanal des Sensorgehäuses. Von den Ausnehmungen dieses Sensorgehäuseteils aus können die Anzahl der Durchgänge bzw. der Durchläufe der Drosselstellen zwischen dem Einlasskanal bzw. dem Auslasskanal und dem Hauptkanal sowie dem Messkanal durch Hinzufügen oder Verschließen einfach verändert werden. Ebenso kann der Querschnitt der Durchgänge bzw. -läufe falls erforderlich nachträglich problemlos abgeändert werden. Damit lässt sich das Teilungsverhältnis des Massenstroms zwischen dem Hauptkanal und dem Messkanal stufenweise anpassen um den Messbereich des Flusssensors zu verändern.

Nachfolgend wird die Erfindung anhand zweier in der Zeichnung dargestellten Ausführungsbeispiele näher erläutert. Weitere Merkmale der Erfindung ergeben sich aus der folgenden Beschreibung des jeweiligen Ausführungsbeispiels der Erfindung in Verbindung mit den Ansprüchen und der beigefügten Zeichnung. Die einzelnen Merkmale der Erfindung können entweder für sich allein oder zu mehreren bei unterschiedlichen Ausführungsformen der Erfindung verwirklicht sein. Es zeigen:
- Figur 1: eine erste Ausführungsform eines zentralen Sensorgehäuseteils des erfindungsgemäßen Flusssensors in perspektivischer Ansicht;
- Figur 2: eine zweite Ausführungsform eines zentralen Sensorgehäuseteils des erfindungsgemäßen Flusssensors in zwei perspektivischen Ansichten (Figur 2a, 2b);
- Figur 3: das erste zentrale Sensorgehäuseteil aus Figur 1 in Draufsicht und in Seitenansicht (Figur 3a, 3b);
- Figur 4: zwei Schnittdarstellungen des ersten zentralen Sensorgehäuseteils gemäß Figur 3 entlang der Schnittlinien A-A (Figur 4a) und B-B (Figur 4b);
- Figur 5: das zweite zentrale Sensorgehäuseteil aus Figur 2 in Draufsicht von oben und von unten und in Seitenansicht (Figur 5a, 5b, 5c); und
- Figur 6: zwei Schnittdarstellungen des zweiten zentralen Sensorgehäuseteils gemäß Figur 5 entlang der Schnittlinien A-A (Figur 6a) und B-B (Figur 6b); und
- Figur 7: eine Schnittdarstellung eines dritten zentralen Gehäuseteils, mit zusätzlichen Leitungskanälen zum Anschluss eines Ventils.

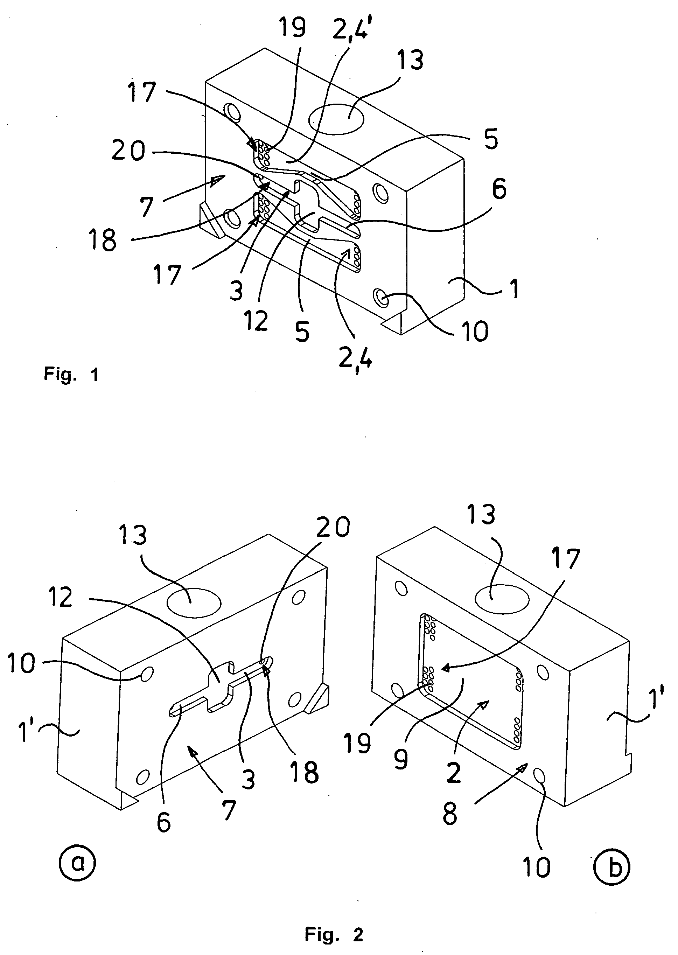

Die Figuren 1, 2a, 2b zeigen zwei Ausführungsformen eines zentralen Sensorgehäuseteils 1, 1' eines Sensorgehäuses eines erfindungsgemäßen Flusssensors zur Messung des Flusses eines gasförmigen oder flüssigen Mediums. Die Sensorgehäuseteile 1, 1' weisen jeweils einen Hauptkanal 2 und einen parallel zu dem Hauptkanal 2 geschalteten Messkanal 3 auf. Bei dem in der Figur 1 dargestellten Sensorgehäuseteil 1 sind der Hauptkanal 2 und der Messkanal 3 in eine gemeinsame Ebene des Sensorgehäuseteils 1 angeordnet. Bei dem in den Figuren 2a, 2b dargestellten zweiten Sensorgehäuseteil 1' sind der Hauptkanal 2 und der Messkanal 3 in verschiedenen Ebenen des Sensorgehäuseteils 1' angeordnet.

Der Hauptkanal 2 ist bei dem in der Figur 1 abgebildeten Sensorgehäuseteil 1 in zwei Hauptkanalzweige 4, 4' aufgeteilt, bei dem in den Figuren 2a, 2b verbildlichten Sensorgehäuseteil 1' ist keine Verzweigung des Hauptkanals 2 vorgesehen. Bei dem Sensorgehäuseteil 1 sind die Hauptkanalzweige 4, 4' beidseits des Messkanals 3 symmetrisch zu dem Messkanal 3 angeordnet. Die beiden Hauptkanalzweige 4, 4' sind dabei als Ausnehmungen 5, 5' und der Messkanal 3 als Ausnehmung 6 an einer ersten Flachseite 7 des Sensorgehäuseteils 1 ausgebildet. Demgegenüber weist das in der Figur 2 dargestellte Sensorgehäuseteil 1' auf der ersten Flachseite 7 nur eine Ausnehmung 6 als Messkanal 3 auf (Figur 2a). Der Hauptkanal 2 ist auf einer der ersten Flachseite 7 gegenüberliegenden zweiten Flachseite 8 des Sensorgehäuseteils 1' angeordnet und dort als Ausnehmung 9 eingebracht (Figur 2b).

Zur Bildung von in Umfangsrichtung geschlossenen Messkanälen 3 und Hauptkanalzweigen 4, 4' bzw. eines entsprechenden geschlossenen Hauptkanals 2 sind bei dem in den Figuren 1, 2 dargestellten Ausführungsbeispielen des erfindungsgemäßen Flusssensors jeweils den Flachseiten 7, 8 zugeordnete weitere in der Zeichnung nicht dargestellte Sensorgehäuseteile vorgesehen. Diese Sensorgehäuseteile decken die Flachseiten 7, 8 des Sensorgehäuseteils 1 bzw. 1' vollflächig ab. Sie sind vorzugsweise als plattenförmige ebene flache Sensorgehäuseteile ausgebildet, die einen Gegenhalter bilden, und weisen entsprechend zu den vier Bohrungen 10 der Sensorgehäuseteile 1, 1' angeordnete und ausgeführte Bohrungen auf. Die Sensorgehäuseteile 1,1' und die in der Zeichnung nicht dargestellten Sensorgehäuseteile, zwischen denen der Hauptkanal 2 bzw. der Messkanal 3 gebildet ist, können so auf einfache Weise fluiddicht miteinander verschraubt werden.

Außerdem weist die Ausnehmung 6 für den Messkanal 3 in etwa mittig eine Aufweitung 12 auf, an der ein ebenfalls in der Zeichnung nicht dargestelltes Sensorelement zur Messung des Flusses angeordnet ist. Zu dem Sensorelement ist ein Zugang 13 vorgesehen, durch den mit dem Sensorelement verbundene Anschlussleitungen fluiddicht herausgeführt werden können. Die Anschlussleitungen können als Kabel oder als flache Leiterbahnfolie abgedichtet herausgeführt werden. Sämtliche Sensorgehäuseteile des Sensorgehäuses sind vorzugsweise aus Aluminium hergestellt und weisen eine einfache Geometrie auf. Sie können mit einfachen etablierten Fertigungsverfahren einfach hergestellt und bearbeitet werden.

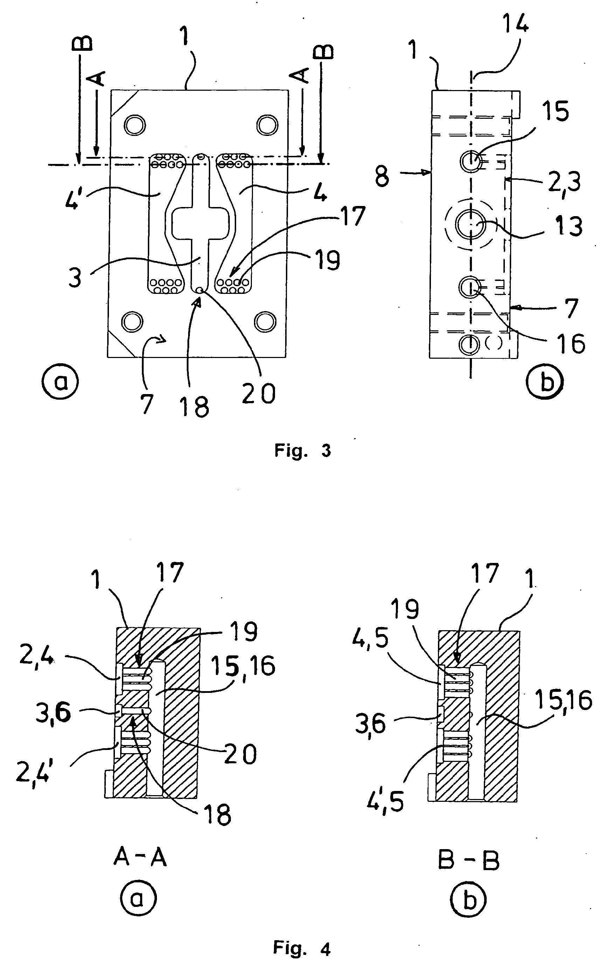

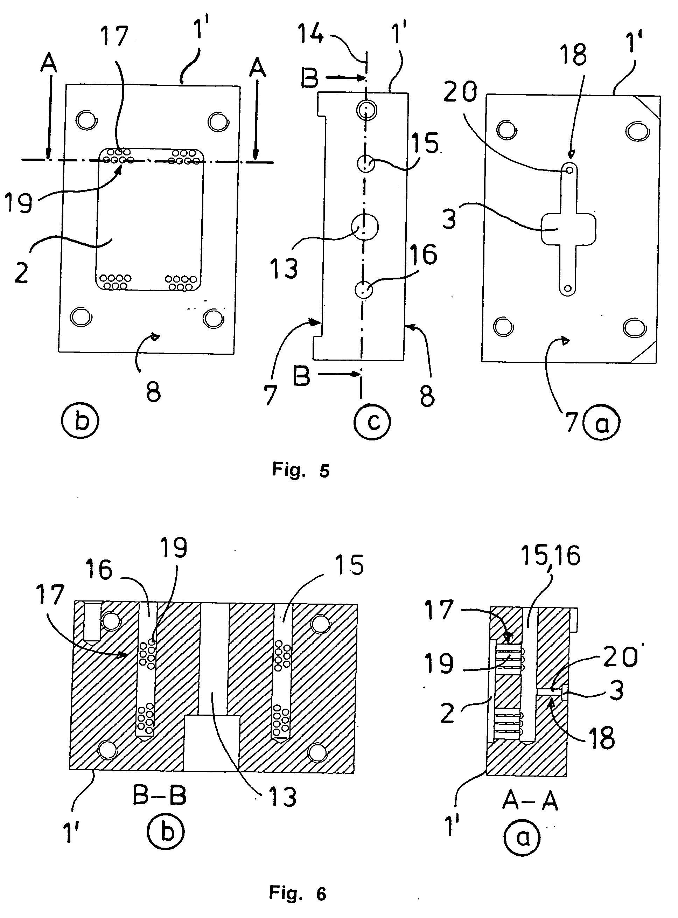

Die Figuren 3a und 5a, 5b zeigen die Flachseiten 7 bzw. 8 der Sensorgehäuseteile 1, 1' in Draufsicht mit dem Messkanal 3 und dem Hauptkanal 2 bzw. den Hauptkanalzweigen 4, 4'. Wie den zugeordneten Figuren 3b und 5c zu entnehmen ist, die das zentrale Sensorgehäuseteil 1 bzw. das zentrale Sensorgehäuseteil 1' in Seitenansicht abbilden, ist in der Mittelebene 14 neben dem Zugang 13 von diesem beabstandet jeweils ein Einlasskanal 15 und ein Auslasskanal 16 auf unterschiedlichen Seiten des Zugangs 13 angeordnet. Zwischen dem Einlasskanal 15 und dem Auslasskanal 16 erstreckt sich ein Strömungskanal, der von dem Hauptkanal 2 und dem parallel zu dem Hauptkanal 2 geschalteten Messkanal 3 gebildet ist. Deutlich sind die vier Hauptkanal-Drosselstellen 17 mit je sieben Durchgängen 19 und die zwei MesskanalDrosselstellen 18 mit je einem Durchlauf 20 zu erkennen, die sich zwischen der Mittelebene 14 mit dem Einlasskanal 15 bzw. Auslasskanal 16 und den Flachseiten 7 bzw. 8 eingangs- und ausgangsseitig des Messkanals 3 und der Hauptkanalzweige 4, 4' des Hauptkanals 2 erstrecken.

Die Querschnittsdarstellungen der Sensorgehäuseteile 1, 1' in den Figuren 4a, 4b und 6a, 6b zeigen den Verlauf des Einlasskanals 15 und des Auslasskanals 16. Diese erstrecken sich quer zu dem Hauptkanal 2, bzw. den Hauptkanalzweigen 4, 4' und dem Messkanal 3. Sie untergreifen die Kanäle 2, 3 in Querrichtung vollständig. Zwischen dem Einlasskanal 15 sowie dem Auslasskanal 16 und den Ausnehmungen 5, 9 für den Hauptkanal 2 ist jeweils eine Hauptkanal-Drosselstelle 17 eingangs- und ausgangsseitig an dem Hauptkanal 2 angeordnet. Des weiteren ist zwischen dem Einlasskanal 15 und dem Auslasskanal 16 und der Ausnehmung 6 für den Messkanal eine Messkanal-Drosselstelle 18 eingangs- und ausgangsseitig an dem Messkanal 3 vorgesehen. Die Hauptkanal-Drosselstellen 17 weisen jeweils sieben Durchgänge 19 auf, die in Länge und Durchmesser identisch ausgebildet sind. Die Durchgänge 19 sind entsprechend den Figuren 4a, 4b, 6a, 6b in Flussrichtung des Mediums parallel zueinander angeordnet und erstrecken sich orthogonal zu dem Einlasskanal 15, dem Auslasskanal 16 und den Ausnehmungen 5, 6, 9 für den Hauptkanal 2 bzw. den Messkanal 3. Die Messkanal-Drosselstelle 19 weisen dem gegenüber jeweils nur einen Durchlauf 20 auf, der sich parallel zu den Durchgängen 19 erstreckt. Die Durchläufe 20 sind in ihrer Länge und in ihrem Durchmesser entsprechend den Durchgängen 19 der Hauptkanal-Drosselstelle 17 ausgebildet.

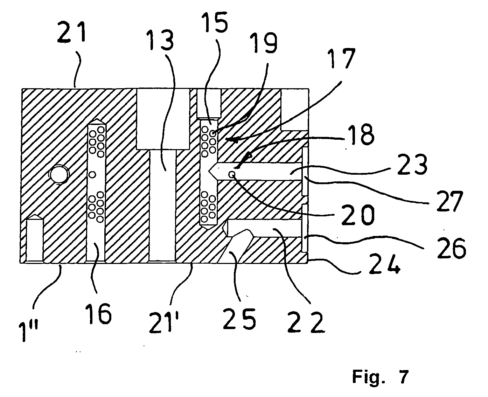

Die Figur 7 zeigt eine Variante des in der Figur 6 gezeigten zentralen Gehäuseteils 1' als Gehäuseteil 1". Das Gehäuseteil 1" unterscheidet sich von dem Gehäuseteil 1' durch die zwei zusätzlichen Leitungskanäle 22, 23, die sich von einer Querseite 24 des Gehäuseteils 1" orthogonal weg parallel zueinander erstrecken und durch in einen Zuflusskanal 25, der von der gleichen Längsseite 21' des Gehäuseteils 1" ausgeht wie der Auslasskanal 16. Der Zuflusskanal 25 mündet in den flussabwärts angeordneten ersten Leitungskanal 22, der an der Querseite 24 des Gehäuseteils 1" einen Ausgang 26 aufweist. Der zweite Leitungskanal 23, der einen Eingang 27 an der entsprechenden Querseite 24 aufweist, mündet in den Einlasskanal 15, der auf der Längsseite 21 des Gehäuseteils 1" verschlossen ist. An der Querseite 24 kann ein in der Zeichnung nicht dargestelltes Ventil mit dem Ausgang 26 und dem Eingang 27 der Leitungskanäle 22, 23 verbunden werden. Der zweite Leitungskanal 23, der flussabwärts dem ersten Leitungskanal 22 verläuft, ist direkt mit dem eingangsseitigen Durchlauf 20 des in dieser Figur nicht sichtbaren Messkanals und über den Einlasskanal 15 mit den eingangsseitigen Durchgängen 19 des in dieser Figur nicht sichtbaren Hauptkanals verbunden.

## Patentansprüche

1. Flusssensor zur Messung des Flusses eines gasförmigen oder flüssigen Mediums, mit einem Sensorgehäuse, in dem sich zwischen einem Einlasskanal (15) und einem Auslasskanal (16) ein Strömungskanal erstreckt, der einen Hauptkanal (2) und einen parallel zu dem Hauptkanal (2) geschalteten Messkanal (3) aufweist, wobei in dem Hauptkanal (2) mindestens eine Hauptkanal-Drosselstelle (17) angeordnet ist und der Messkanal (3) ein Sensorelement zur Messung des Flusses aufweist, **dadurch gekennzeichnet, dass** die mindestens eine Hauptkanal-Drosselstelle (17) mehrere Durchgänge (19) zwischen dem Einlasskanal (15) und dem Hauptkanal (2) und/oder zwischen dem Hauptkanal (2) und dem Auslasskanal (16) aufweist.

2. Flusssensor nach Anspruch 1, **dadurch gekennzeichnet, dass** die an der Hauptkanal-Drosselstelle (17) vorgesehenen Durchgänge (19) identisch ausgebildet sind und sich in Flussrichtung parallel zueinander erstrecken.

3. Flusssensor nach Anspruch 1 oder 2, **dadurch gekennzeichnet, dass** der Hauptkanal (2) in mindestens zwei parallel zu dem Messkanal (3) geschaltete Hauptkanalzweige (4, 4') aufgeteilt ist, wobei mindestens ein Hauptkanalzweig (4, 4') eine Hauptkanal-Drosselstelle (17) aufweist.

4. Flusssensor nach einem der vorstehenden Ansprüche, **dadurch gekennzeichnet, dass** der Hauptkanal (2) eingangsseitig und ausgangsseitig je eine Hauptkanal-Drosselstelle (17) aufweist.

5. Flusssensor nach einem der vorstehenden Ansprüche, **dadurch gekennzeichnet, dass** der Messkanal (3) eingangsseitig und/oder ausgangsseitig eine Messkanal-Drosselstelle (18) aufweist.

6. Flusssensor nach Anspruch 5, **dadurch gekennzeichnet, dass** die Messkanal-Drosselstelle (18) einen Durchlauf (20) aufweist, der entsprechend dem Durchgang (19) der Hauptkanal-Drosselstelle (17) ausgebildet ist.

7. Flusssensor nach einem der vorstehenden Ansprüche, **dadurch gekennzeichnet, dass** das Sensorgehäuse eine Bedieneinrichtung zum Verschließen und/oder Öffnen mindestens eines Durchgangs (19) der Hauptkanal-Drosselstelle (17) aufweist.

8. Flusssensor nach einem der vorstehenden Ansprüche, **dadurch gekennzeichnet, dass** der Einlasskanal (15) und/oder der Auslasskanal (16) in einer anderen Ebene als der Hauptkanal (2) und/oder der Messkanal (3) angeordnet ist, unabhängig davon, ob der Hauptkanal (2) und der Messkanal (3) in einer Ebene in dem Sensorgehäuse angeordnet sind oder der Hauptkanal (2) und der Messkanal (3) in verschiedenen Ebenen in dem Sensorgehäuse angeordnet sind.

9. Flusssensor nach einem der vorstehenden Ansprüche, **dadurch gekennzeichnet, dass** das Sensorgehäuse ein erstes Sensorgehäuseteil (1, 1', 1") und mindestens ein zweites Sensorgehäuseteil aufweist, zwischen denen der Hauptkanal (2) und/oder der Messkanal (3) gebildet ist, wobei der Hauptkanal (2) und der Messkanal (3) als Ausnehmung (5, 6, 9) in dem ersten und/oder dem zweiten oder weiteren Sensorgehäuseteilen ausgeführt ist.

10. Flusssensor nach Anspruch 9, **dadurch gekennzeichnet, dass** ein Sensorgehäuseteil (1, 1', 1") die Hauptkanal-Drosselstelle (17) und/oder die Messkanal-Drosselstelle (18) aufweist, die sich bei zusammengefügten Sensorgehäuseteilen quer zu dem Hauptkanal (2) und dem Messkanal (3) erstreckt.

11. Flusssensor nach Anspruch 10, **dadurch gekennzeichnet, dass** das Sensorgehäuseteil (1, 1', 1") mit der mindestens einen Hauptkanal-Drosselstelle (17) und/oder der mindestens einen Messkanal-Drosselstelle (18) als zusätzliches Sensorgehäuseteil zu dem den Hauptkanal (2) und/oder den Messkanal (3) bildenden Sensorgehäuseteilen vorgesehen ist.

12. Flusssensor nach Anspruch 10 oder 11, **dadurch gekennzeichnet, dass** an dem Sensorgehäuseteil (1, 1', 1 ") mit der Hauptkanal-Drosselstelle (17) und/oder der Messkanal-Drosselstelle (18) der Einlasskanal (15) und/oder der Auslasskanal (16) des Strömungskanals angeordnet ist.

13. Flusssensor nach einem der vorstehenden Ansprüche 9 bis 12, **dadurch gekennzeichnet, dass** die Ausnehmungen (5, 6, 9) für den Hauptkanal (2) und den Messkanal (3), der Einlasskanal (15) und der Auslasskanal (16) des Strömungskanals und die Hauptkanal-Drosselstelle (17) sowie die Messkanal-Drosselstelle (18) gemeinsam in dem ersten Sensorgehäuseteil (1, 1', 1") angeordnet sind und dass das mindestens zweite Sensorgehäuseteil als ebener Gegenhalter ausgebildet ist.

## Claims

1. Flow sensor for measuring the flow of a gaseous or liquid medium with a sensor housing in which, between an inlet channel (15) and an outlet channel (16), a flow channel extends that comprises a main channel (2) and a measuring channel (3) that is arranged parallel to the main channel (2), with at least one main channel choke point (17) being arranged in the main channel (2), and with the measuring channel (3) comprising a sensor element for measuring the flow, **characterized in that** the at least one main channel choke point (17) comprises several passages (19) between the inlet channel (15) and the main channel (2) and/or between the main channel (2) and the outlet channel (16).

2. Flow sensor according to Claim 1, **characterized in that** the passages (19) provided at the main channel choke point (17)are of identical shape and extend parallel to each other in the flow direction.

3. Flow sensor according to Claim 1 or 2, **characterized in that** the main channel (2) is divided into at least two main channel branches (4, 4') arranged parallel to the measuring channel (3), with at least one main channel branch (4, 4') comprising a main channel choke point (17).

4. Flow sensor according to any one of the preceding Claims, **characterized in that** the main channel (2) comprises one main channel choke point (17) each on the inlet side and the outlet side.

5. Flow sensor according to any one of the preceding Claims, **characterized in that** the measuring channel (3) comprises a measuring channel choke point (18) on the inlet side and/or the outlet side.

6. Flow sensor according to Claim 5, **characterized in that** the main channel choke point (18) comprises a passage (20) that is shaped to correspond to the passage (19) of the main channel choke point (17).

7. Flow sensor according to any one of the preceding Claims, **characterized in that** the sensor housing comprises an operating device for closing and/or opening at least one passage (19) of the main channel choke point (17).

8. Flow sensor according to any one of the preceding Claims, **characterized in that** the inlet channel (15) and/or the outlet channel (16) are arranged on a different plane than the main channel (2) and/or the measuring channel (3), regardless of whether the main channel (2) and the measuring channel (3) are arranged on one plane of the sensor housing or whether the main channel (2) and the measuring channel (3) are arranged on different planes of the sensor housing.

9. Flow sensor according to any one of the preceding Claims, **characterized in that** the sensor housing comprises a first sensor housing part (1, 1', 1") and at least one second sensor housing part between which the main channel (2) and/or the measuring channel (3) is formed, with the main channel (2) and the measuring channel (3) being formed as recess (5, 6, 9) in the first and/or the second or additional sensor housing parts.

10. Flow sensor according to Claim 9, **characterized in that** a sensor housing part (1, 1', 1") comprises the main channel choke point (17) and/or the measuring channel choke point (18) that extends transversely to the main channel (2) and the measuring channel (3) when the sensor housing parts are assembled.

11. Flow sensor according to Claim 10, **characterized in that** the sensor housing part (1, 1', 1") with the at least one main channel choke point (17) and/or the at least one measuring channel choke point (18) is provided as an additional sensor housing part to the sensor housing parts forming the main channel (2) and/or the measuring channel (3).

12. Flow sensor according to Claim 10 or 11, **characterized in that** the inlet channel (15) and/or the outlet channel (16) of the flow channel are arranged on the sensor housing part (1, 1', 1") with the main channel choke point (17) and/or the measuring channel choke point (18).

13. Flow sensor according to any one of the preceding Claims 9 to 12, **characterized in that** the recesses (5, 6, 9) for the main channel (2) and the measuring channel (3), the inlet channel (15) and the outlet channel (16) of the flow channel, and the main channel choke point (17) as well as the measuring channel choke point (18) are all arranged in the first sensor housing part (1, 1', 1"), and that the at least second sensor housing part is shaped as a flat counter-holder.

## Revendications

1. Capteur de flux pour mesurer le flux d'un milieu gazeux ou liquide, avec un boîtier de capteur dans lequel un canal d'écoulement s'étend entre un canal d'entrée (15) et un canal de sortie (16), lequel canal d'écoulement présente un canal principal (2) et un canal de mesure (3) couplé en parallèle avec le canal principal (2), au moins une zone de restriction de canal principal (17) étant disposée dans le canal principal (2) et le canal de mesure (3) présentant un élément capteur pour mesurer le flux, **caractérisé en ce que** ladite au moins une zone de restriction de canal principal (17) présente plusieurs passages (19) entre le canal d'entrée (15) et le canal principal (2) et/ou entre le canal principal (2) et le canal de sortie (16).

2. Capteur de flux selon la revendication 1, **caractérisé en ce que** les passages (19) prévus dans la zone de restriction de canal principal (17) sont identiques et s'étendent parallèlement les uns aux autres dans la direction du flux.

3. Capteur de flux selon la revendication 1 ou la revendication 2, **caractérisé en ce que** le canal principal (2) est divisé en au moins deux branches de canal principal (4, 4') couplées en parallèle avec le canal de mesure (3), au moins une branche de canal principal (4, 4') présentant une zone de restriction de canal principal (17).

4. Capteur de flux selon l'une des revendications précédentes, **caractérisé en ce que** le canal principal (2) présente une zone de restriction de canal principal (17) du côté de l'entrée et du côté de la sortie.

5. Capteur de flux selon l'une des revendications précédentes, **caractérisé en ce que** le canal de mesure (3) présente une zone de restriction de canal de mesure (18) du côté de l'entrée et/ou du côté de la sortie.

6. Capteur de flux selon la revendication 5, **caractérisé en ce que** la zone de restriction de canal de mesure (18) présente un passage (20) qui est réalisé de la même manière que le passage (19) de la zone de restriction de canal principal (17).

7. Capteur de flux selon l'une des revendications précédentes, **caractérisé en ce que** le boîtier de capteur présente un dispositif de manoeuvre pour fermer et/ou ouvrir au moins un passage (19) de la zone de restriction de canal principal (17).

8. Capteur de flux selon l'une des revendications précédentes, **caractérisé en ce que** le canal d'entrée (15) et/ou le canal de sortie (16) sont disposés dans un autre plan que le canal principal (2) et/ou le canal de mesure (3), indépendamment du fait que le canal principal (2) et le canal de mesure (3) soient disposés dans un plan dans le boîtier de capteur ou que le canal principal (2) et le canal de mesure (3) soient disposés dans des plans différents dans le boîtier de capteur.

9. Capteur de flux selon l'une des revendications précédentes, **caractérisé en ce que** le boîtier de capteur présente une première partie de boîtier de capteur (1, 1', 1") et au moins une deuxième partie de boîtier de capteur, entre lesquelles le canal principal (2) et/ou le canal de mesure (3) est formé, le canal principal (2) et le canal de mesure (3) étant réalisés sous la forme d'un évidement (5, 6, 9) dans la première et/ou la deuxième ou les autres parties de boîtier de capteur.

10. Capteur de flux selon la revendication 9, **caractérisé en ce qu'**une partie de boîtier de capteur (1, 1', 1") présente la zone de restriction de canal principal (17) et/ou la zone de restriction de canal de mesure (18) qui s'étend transversalement au canal principal (2) et au canal de mesure (3) lorsque les parties de boîtier de capteur sont assemblées.

11. Capteur de flux selon la revendication 10, **caractérisé en ce que** la partie de boîtier de capteur (1, 1', 1") avec ladite au moins une zone de restriction de canal principal (17) et/ou ladite au moins une restriction de canal de mesure (18) est prévue comme partie de boîtier de capteur venant en supplément des parties de boîtier de capteur formant le canal principal (2) et/ou le canal de mesure (3).

12. Capteur de flux selon la revendication 10 ou la revendication 11, **caractérisé en ce que** le canal d'entrée (15) et/ou le canal de sortie (16) du canal d'écoulement est disposé sur la partie de boîtier de capteur (1, 1', 1") présentant la zone de restriction de canal principal (17) et/ou la zone de restriction de canal de mesure (18).

13. Capteur de flux selon l'une des revendications précédentes 9 à 12, **caractérisé en ce que** les évidements (5, 6, 9) pour le canal principal (2) et le canal de mesure (3), le canal d'entrée (15) et le canal de sortie (16) du canal d'écoulement ainsi que la zone de restriction de canal principal (17) et la zone de restriction de canal de mesure (18) sont disposées en commun dans la première partie de boîtier de capteur (1, 1', 1 ") et que ladite au moins une deuxième partie de boîtier de capteur est réalisée sous la forme d'un contre-appui plan.
